# FASCICULE DE BREVET EUROPEEN

(11) **EP 4 121 902 B1**
(45) Date de publication et mention de la délivrance du brevet: **31.01.2024**
(21) Numéro de dépôt: 21710497.5
(22) Date de dépôt: 11.03.2021
(51) Int. Cl.: G06K 19/077, G06Q 50/28

(54) **COLIS COMPRENANT UN SCELLÉ RADIO-IDENTIFIÉ**
VERPACKUNG MIT EINER RADIOFREQUENZ-IDENTIFIZIERUNGSDICHTUNG
PACKAGE COMPRISING A RADIO-FREQUENCY IDENTIFICATION SEAL

(30) Priorité: 18.03.2020 FR 2002662
(43) Date de publication de la demande: 25.01.2023
(73) Titulaire: PA.COTTE SA, 1009 Pully (CH)
(72) Inventeur: COTTE, Pierre-Alain, 92224 Amberg (DE)
(74) Mandataire: reuteler & cie SA
(86) Numéro de dépôt international: PCT/EP2021/056272
(87) Numéro de publication internationale: WO 2021/185677

(56) Documents cités:
- EP-A1- 1 087 334
- WO-A1-2019/040844
- WO-A2-01/69524
- GB-A- 2 446 178
- US-A1- 2018 144 573

## Description

Le domaine de l'invention est celui de la logistique. Plus précisément, le domaine de l'invention est celui de la conception et de la fabrication de colis sécurisés, et de systèmes de traçabilité permettant de contrôler l'état du colis.

L'invention concerne plus spécifiquement des colis pourvus de scellés.

Les colis permettent d'acheminer des objets au sein d'une chaîne logistique. D'une manière générale, un colis est un contenant définissant une cavité dans laquelle un ou plusieurs objets sont destinés à être positionnés lors d'un acheminement.

Les colis comprennent également des moyens de fermeture du colis permettant d'interdire l'accès à la cavité.

Par exemple, un colis peut être formé par une caisse définissant la cavité, ainsi que par un couvercle monté mobile ou amovible sur la caisse, ou par un ou plusieurs rabats présentés par la caisse elle-même. Des boîtes ou des cartons sont classiquement employés pour former de tels colis.

Selon un autre exemple, un colis peut être formé par un sac souple, par exemple plastifié, qui définit la cavité destinée à recevoir le ou les objets. Dans ce cas, les moyens de fermeture peuvent par exemple être formés par un film adhésif apposé sur le sac préalablement replié sur lui-même pour refermer une ouverture permettant l'accès à la cavité. Les moyens de fermeture peuvent aussi être constitués par un pan excédentaire du matériau formant le sac et destiné à être rabattu sur l'ouverture puis collé sur le sac souple.

De manière générale, il est important de pouvoir contrôler et/ou garantir le contenu des colis.

A cet effet, des moyens de sécurisation peuvent être utilisés sur les colis. Notamment, des scellés peuvent être apposés sur les colis pour vérifier qu'ils n'ont pas été ouverts.

Les scellés constituent classiquement un dispositif fixé sur un bien à sauvegarder (par exemple un document, un paquet, un local, ...) de manière à ce qu'il soit impossible, sans effraction et dégradation du scellé, de procéder à l'ouverture de ce bien.

Un scellé peut être constitué d'un unique cachet frappé d'un sceau, tel qu'un scellé de cire protégeant un document authentique, ou encore en un scellé de plomb du type protégeant les compteurs de consommation d'eau ou d'énergie.

Selon un autre exemple de scellé, on connaît des scellés en plastique qui permettent de garantir le maintien dans une configuration de fermeture de sacs postaux, de containers ou de boîtes métalliques. Ces scellés sont généralement réalisés en matière plastique et comprennent un corps et un lien s'étendant à partir du corps. Le lien est relativement souple et est destiné à former une boucle puis à être engagé dans une ouverture complémentaire présentée par le corps. L'ouverture et le lien sont conçus de manière à ce que l'introduction du lien dans l'ouverture soit irréversible, et que seule une dégradation elle-même irréversible du scellé permette l'ouverture de la boucle.

Un scellé comprend ainsi, selon une conception classique, une partie dégradable irréversiblement lors de l'ouverture du bien sur lequel le scellé est apposé.

De tels scellés sont particulièrement simples à fabriquer et à mettre en oeuvre. Toutefois, ils ne permettent pas de connaître avec précision, en temps réel, quand un objet a été ouvert, ou encore de connaitre l'état du scellé sans une consultation visuelle directement réalisée sur place, parfois ou souvent impossible.

Dans le domaine de l'invention, il est par ailleurs connu d'utiliser des étiquettes intégrant des identifiants uniques, tels que des références alphanumériques, des codes-barres, ou encore des moyens d'identification par radiofréquence (RFID), sur des bouteilles de vin.

Ces étiquettes électroniques permettent aux consommateurs d'obtenir des informations inhérentes à la bouteille, préalablement enregistrées dans une base de données.

Les moyens d'identifications par radiofréquence consistent notamment en une puce électronique de radio identification couplée à une antenne.

Pour obtenir les informations contenues dans la puce électronique, il est nécessaire d'utiliser un émetteur-récepteur complémentaire de l'antenne et de la puce électronique. Cet émetteur-récepteur est conçu pour émettre une requête par radio destinée à être captée par l'antenne et transmise à la puce électronique, puis pour recevoir une réponse produite par la puce électronique et envoyée par l'antenne.

Ainsi, de telles étiquettes permettent de taguer les bouteilles afin d'assurer la traçabilité des grands crus et de faciliter les inventaires sans manipuler les bouteilles. Et pour le consommateur, il peut, via son smartphone, accéder à la fiche détaillée du produit par le biais d'un code (QR code) affiché directement sur l'étiquette.

En pratique, ces étiquettes RFID sont mises en oeuvre pour répondre aux attentes du milieu viticole, à savoir la contrefaçon du vin et la traçabilité du produit.

Cela étant, ces moyens spécifiques ne sont pas prévus pour s'assurer de la non ouverture d'un paquet ou d'un emballage ou encore d'un colis.

L'invention a notamment pour objectif de palier les inconvénients de l'art antérieur

Plus précisément, l'invention a pour objectif de proposer un colis sécurisé à l'aide d'un scellé, qui permette de savoir en temps réel si le scellé a été rompu.

Cet objectif, ainsi que d'autres qui apparaîtront par la suite, est atteint grâce à l'invention qui a pour objet un colis selon la revendication 1.

Grâce au colis selon l'invention, il est possible de connaître en temps réel si le scellé garantissant le maintien dans la configuration fermée du colis a été dégradé. Cette information permet ainsi de savoir que le colis a été ouvert pour la première fois suite à l'apposition du scellé, ou à son initialisation.

Une consultation de l'unité électronique distante de suivi du colis permet de prendre connaissance en temps réel de cette information.

En effet, une ouverture du colis, et en d'autres termes un passage de sa configuration de fermeture à la configuration d'ouverture, entraîne une dégradation (rupture) de la partie dégradable du scellé.

Du fait que les premiers moyens de communication sont partiellement intégrés dans la partie dégradable, alors ils sont également dégradés lors de l'ouverture du colis.

Cette dégradation des premiers moyens de communication empêche alors la réception et/ou la transmission de la requête émise par l'émetteur-récepteur jusqu'à la puce électronique de radio identification, et cette puce électronique ne produit pas de signal retour.

De manière plus générale, la dégradation des premiers moyens de communication désactive définitivement l'ensemble de radio identification formé par ces premiers moyens de communication et la puce électronique de radio identification.

Selon une caractéristique avantageuse, les premiers moyens de communication comprennent également au moins un conducteur électrique sécable couplant l'antenne à la puce électronique de radio identification, le ou les conducteurs électriques sécables traversant la partie dégradable du scellé.

Dans ce cas, lors de la dégradation du scellé, le ou les conducteurs électriques sécables sont rompus. La dégradation du scellé entraîne ainsi un découplage de la puce électronique de radio identification à l'antenne par le biais d'une dégradation du ou des conducteurs électriques sécables.

Cette solution est aisée à mettre en oeuvre du fait que seuls le ou les conducteurs électriques sécables aient à traverser la partie dégradable du scellé.

Selon une conception préférée, chacun du contenant et des moyens de fermeture présente un organe de réception du scellé, les deux organes de réception étant à proximité immédiate l'un de l'autre dans la configuration de fermeture du colis, le scellé prend la forme d'un collier destiné à être couplé sur chacun des organes de réception dans la configuration de fermeture du colis.

Cette conception offre une facilité de mise en oeuvre particulièrement importante du colis selon l'invention et de son scellé.

En effet, il suffit à un utilisateur de refermer le colis puis d'apposer le scellé sur les deux organes de réception pour que le scellé soit installé.

Par exemple, les deux organes de réception peuvent prendre chacun la forme d'un anneau au travers duquel le collier est inséré pour former une boucle inviolable.

Les deux organes de réception peuvent également prendre chacun la forme d'un crochet et, dans ce cas, la forme des crochets empêche au scellé d'être retiré sans être rompu, le collier devant alors être serré de manière ajusté sur les deux crochets.

Selon un mode de réalisation particulier, le collier comprend :
- une tête portant une cage ;
- une bande en matériau souple s'étendant depuis la tête, et étant complémentaire en insertion de la cage, la bande formant la partie dégradable du scellé.

Le collier présente ainsi une forme aisée et peu onéreuse à mettre en oeuvre.

Dans ce cas, avantageusement, la bande s'étend depuis la tête jusqu'à une extrémité libre, le ou les conducteurs électriques sécables s'étendant le long de la bande entre la tête et l'extrémité libre.

Cette conception permet au collier de former une boucle plus ou moins importante en fonction du degré d'insertion de la bande dans la cage.

En effet, étant donné que le ou les conducteurs électriques s'étendent le long de la bande entre la tête et l'extrémité libre, alors la bande peut être coupée à n'importe quel endroit entre la tête et l'extrémité libre de la bande tout en produisant l'effet de découplage recherché entre la puce électronique de radio identification et l'antenne.

Plus précisément, selon une caractéristique avantageuse, la puce électronique de radio identification est logée dans l'extrémité libre de la bande, et l'antenne des premiers moyens de communication est logée dans la tête du collier.

Ce mode de réalisation est particulièrement aisé à mettre en oeuvre et permet de rendre le collier d'apparence non spécifique à la mise en oeuvre d'une étiquette de radio identification.

Plus précisément, une personne non familière du colis selon l'invention est alors d'autant moins susceptible d'identifier le scellé comprenant la puce électronique de radio identification comme étant un scellé différent d'autres scellés classiques ne comprenant pas de tels moyens de radio identification.

Selon une conception plus particulière, le collier est un collier de serrage autobloquant, la cage étant une cage anti-retour.

Un tel type de collier de serrage autobloquant offre une simplicité de mise en oeuvre particulièrement intéressante.

En effet, de manière classique, il suffit à un utilisateur d'insérer la bande dans la cage anti retour pour qu'un verrouillage de la bande dans la cage soit directement effectif.

Selon l'invention, l'unité électronique est logée dans une paroi, ou un fond, ou un couvercle du contenant.

L'unité électronique n'est ainsi pas décelable depuis l'intérieur du contenant.

L'unité électronique est alors dissimulée et permet de participer au caractère indétectable de la capacité du scellé à permettre l'envoi d'une alerte lors de la rupture du scellé.

Avantageusement, l'unité électronique comprend des moyens d'horodatage du signal d'alerte.

De cette manière, le signal d'alerte comprend une donnée relative au moment de la la rupture du scellé et à l'ouverture du colis.

Ceci permet à un utilisateur d'enregistrer à quel moment précisément le scellé a été dégradé.

L'invention a également pour objet un système de traçabilité comprenant :
- au moins un colis selon l'une quelconque des revendications précédentes, le scellé du colis comprenant un code d'identification initial inscrit dans la puce électronique de radio identification ;
- un serveur informatique intégrant le récepteur distant, le serveur informatique comprenant une base de donnée répertoriant des codes d'identifications certifiés, et étant configuré pour identifier le code d'identification initial du scellé dans la base de donnée.

Ce système de traçabilité permet de sécuriser la création d'un suivi électronique de l'état du scellé.

Selon cette conception, seuls les scellés préalablement connus dans la base de donnée peuvent fonctionner.

L'invention a encore pour objet un procédé de traçabilité d'un colis du système de traçabilité décrit précédemment, le procédé comprenant :
- une étape d'émission d'une requête radio par l'émetteur-récepteur en direction du scellé, la requête radio étant susceptible d'être captée par l'antenne puis transmise à la puce électronique ;
- une étape d'attente de réception d'un signal retour produit par la puce électronique en réponse à la requête radio ;
et en ce que, en l'absence de réception d'un signal retour, l'étape d'attente de réception d'un signal retour est suivie par une étape de diffusion d'un signal d'alerte à destination d'un récepteur distant.

Avantageusement, le procédé comprend, préalablement à l'étape d'émission d'une requête radio, une séquence d'appairage du scellé au colis, la séquence d'appairage comprenant successivement :
- une étape de lecture du code d'identification initial du scellé par l'émetteur-récepteur ;
- une étape de transmission au serveur informatique du code d'identification initial par l'émetteur-récepteur ;
- une étape d'identification du code d'identification initial par le serveur informatique ;
- une étape de génération d'un nouveau code d'identification unique par le serveur informatique, et de transmission du nouveau code d'identification unique à l'émetteur-récepteur ;
- une étape d'envoi et d'inscription du nouveau code d'identification dans le scellé par l'émetteur-récepteur.

Selon le procédé, un nouveau code d'identification, généré et certifié par le serveur informatique, est inscrit dans la puce électronique de radio identification du scellé.

De cette manière dès qu'il est utilisé pour sécuriser un colis, le scellé bénéficie d'une identité nouvelle dûment répertoriée dans le système.

Avantageusement, la séquence d'appairage se termine par un test de présence du scellé sur le colis par l'émetteur-récepteur.

Préférentiellement, l'étape d'identification consiste à comparer le code d'identification initial aux codes d'identification certifiés de la base de données pour certifier le scellé et autoriser l'étape de génération d'un nouveau code d'identification unique.

Ainsi, un scellé est soit autorisé, soit rejeté lors de la séquence d'appairage.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
[Fig. 1] la figure 1 est une illustration schématique d'un colis selon l'invention, représentant le colis dans une configuration de fermeture, et muni d'au moins un scellé ;
[Fig. 2] la figure 2 est une représentation schématique illustrant plus spécifiquement un scellé apposé sur un colis selon l'invention, le scellé étant plus particulièrement couplé sur deux organes de réception du colis ;
[Fig. 3] la figure 3 est une représentation schématique selon une vue en perspective d'un colis selon l'invention, dans une configuration d'ouverture ;
[Fig. 4] la figure 4 est une représentation schématique d'un système de traçabilité d'un colis selon l'invention.

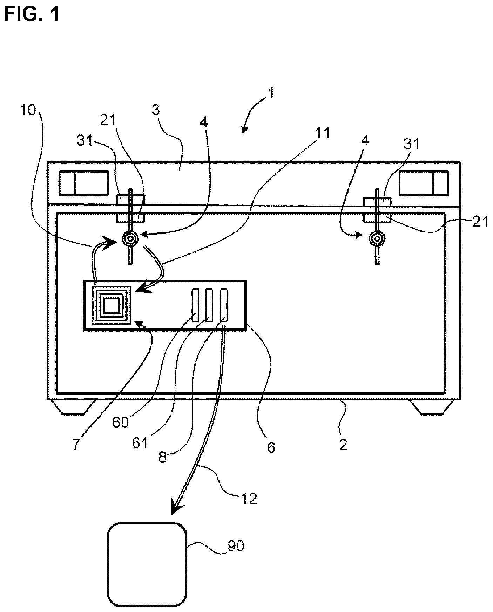

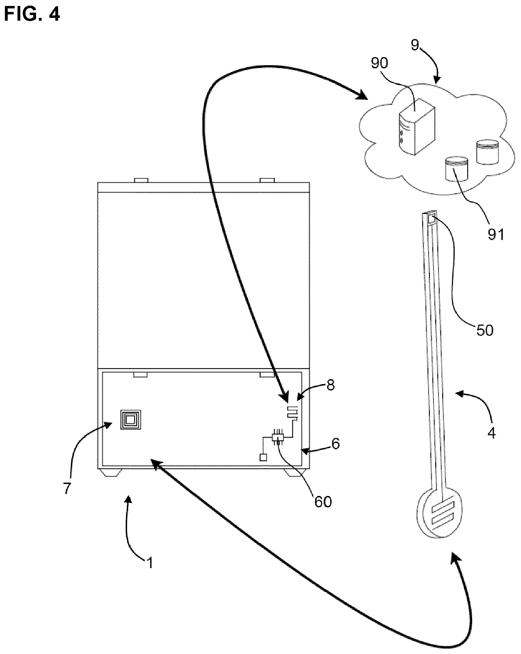

En référence aux figures 1 et 4, un colis 1 selon l'invention est illustré.

Le colis 1 comprend un contenant 2 et des moyens de fermeture 3.

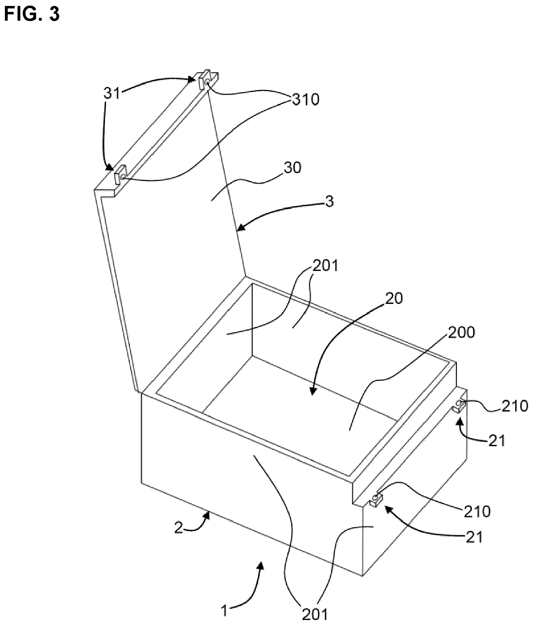

Tel qu'illustré par la figure 3, le contenant 2 présente une cavité 20.

Plus précisément, le contenant 2 est un caisson composé d'un fond 200 et de quatre parois 201 s'étendant en périphérie à partir du fond 200.

Les parois 201 et le fond 200 délimitent conjointement la cavité 20.

Toujours en référence à la figure 3, les moyens de fermeture 3 prennent la forme d'un couvercle 30.

Ce couvercle 30 est articulé sur l'extrémité supérieure de l'une des parois 201 de manière à autoriser ou à interdire l'accès à la cavité 20.

Plus généralement, et en référence aux figures 1 et 3, les moyens de fermeture 3 et le contenant 2 peuvent adopter ensemble soit une configuration de fermeture dans laquelle les moyens de fermeture 3 interdisent l'accès à la cavité 20 (configuration illustré par la figure 1) ou alors une configuration d'ouverture dans laquelle les moyens de fermeture 3 autorisent l'accès à la cavité 20 (configuration illustrée par la figure 3).

Selon d'autres modes de réalisation envisageables et non illustrés, le contenant 2 peut être formé par un sachet souple et les moyens de fermeture 3 prennent alors la forme d'un rabat destiné à s'étendre en recouvrement d'une ouverture présentée par le sachet souple.

En référence aux figures 1, 2 et 3, et tel que cela est plus détaillé par la suite, chacun du contenant 2 et des moyens de fermeture 3 présente au moins un organe de réception 21, 31 d'un scellé 4.

Notamment, selon le présent mode de réalisation, le contenant 2 présente deux organes de réception 21, et les moyens de fermetures 3 présentent deux organes de réception 31.

Selon le principe de l'invention, le colis 1 comprend également un scellé 4 qui est garant du maintien d'un colis 1 dans sa configuration de fermeture.

Ce scellé 4 comprend une partie dégradable 400 qui est dégradable irréversiblement lors d'un passage du colis 1 dans sa configuration de fermeture à sa configuration d'ouverture.

En d'autres termes, un passage du colis 1 de sa configuration de fermeture à sa configuration d'ouverture est empêché par le scellé 4 ou alors implique la rupture de la partie dégradable 400 pour permettre l'ouverture du colis 1.

Selon le présent mode de réalisation, le scellé 4 prend la forme d'un collier qui est destiné à être couplé sur chacun des organes de réception 21, 31 dans la configuration de fermeture du colis 1.

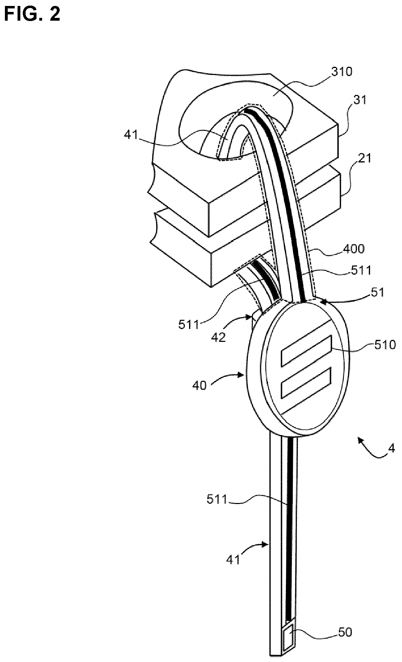

En effet, les deux organes de réception 21, 31 du contenant et des moyens de fermeture 3 sont à proximité immédiate l'un de l'autre dans la configuration de fermeture du colis 1 tel que cela est illustré par les figures 1 et 2.

Notamment, les organes de réception 21, 31 du scellé, présentés par chacun du contenant 2 et des moyens de fermeture 3, prennent la forme de pattes percées se tenant en vis-à-vis l'une de l'autre quand le contenant et les moyens de fermeture sont dans la configuration de fermeture du colis 1, tel qu'illustré par les figures 1 et 2.

Ces pattes percées présentent chacune une ouverture 210, 310 permettant l'introduction du scellé 4, et la formation d'un collier par le scellé.

Plus spécifiquement, le collier comprend, tel qu'illustré par la figure 2, une tête 40 et une bande 41 s'étendant depuis la tête 40.

La tête 40 présente une forme de disque.

Cette tête 40 porte une cage 42.

La bande 41 est formée à partir d'un matériau souple et est complémentaire en insertion de la cage 42. En d'autres termes, la bande 41 peut être insérée dans la cage 42, et la traverser.

Le collier, et plus spécifiquement la tête 40 et la bande 41 sont notamment réalisés en plastique.

Tel que cela est expliqué par la suite, la bande 41 forme la partie dégradable 400 du scellé 4.

Plus particulièrement, le collier est un collier de serrage autobloquant et la cage 42 est une cage anti-retour.

En d'autres termes, l'introduction de la bande 41 au travers de la cage 42 est autorisée dans un sens mais entraîne irrémédiablement le maintien captif de cette bande 41 dans la cage 42.

Il n'est ainsi pas possible de retirer la bande 41 de la cage 42 sans détériorer le scellé 4.

La boucle formée par la bande 41, entre la tête 40 et la cage 42, doit être dégradée si l'on veut ouvrir le colis 1.

Par exemple, la boucle formée par la bande 41 doit être coupée à l'aide d'un outil tranchant, tel qu'une paire de ciseaux ou un cutter.

Avantageusement, la cage 42 et la tête 40 présentent une résistance mécanique à la rupture supérieure à une résistance mécanique à la rupture présentée par la bande 41.

Selon le principe de l'invention, et tel qu'illustré par la figure 2, le scellé 4 comprend une puce électronique 50 de radio identification, ainsi que des premiers moyens de communication 51 couplés à la puce électronique 50.

Le scellé 4 comprend un code d'identification initial. En d'autres termes, ce code d'identification est inscrit dans la puce électronique 50 du scellé 4.

Ce code d'identification initial est propre à chaque scellé.

Potentiellement, le code d'identification initial peut être partagé par plusieurs scellés 4 qui ne sont pas encore utilisés. Par exemple, ces scellés partageant un même code d'identification initial peuvent faire partie d'un même lot.

Tel que cela est détaillé par la suite, la puce électronique 50 est conçue pour pouvoir recevoir un nouveau code d'identification unique.

Avantageusement, ce nouveau code d'identification unique remplace le code d'identification initial inscrit dans la puce électronique 50.

Toujours en référence à la figure 2, les premiers moyens de communication 51 comprennent une antenne 510.

En outre, les premiers moyens de communication 51 s'étendent dans la partie dégradable 400 du scellé 4.

Selon le présent mode de réalisation, les premiers moyens de communication 51 comprennent également un conducteur électrique sécable 511 qui couple l'antenne 510 à la puce électronique 50 de radio identification.

Tel qu'illustré par la figure 2, ce conducteur électrique sécable 511 traverse la partie dégradable 400 du scellé 4.

Selon un autre mode de réalisation envisageable, l'antenne 510 pourrait être située dans la partie dégradable 400 du scellé 4.

En référence à la figure 2, l'antenne 510 est logée dans la tête 40 et le conducteur électrique sécable 511 s'étend le long de la bande 41 jusqu'à une extrémité libre 410 de la bande dans laquelle est logée la puce électronique 50 de radio identification.

Selon le présent mode de réalisation, la puce électronique 50 et les premiers moyens de communication 51 sont noyés dans le scellé 4.

Notamment, l'antenne 510 est noyée dans le matériau formant la tête 40 du scellé 4, et le conducteur électrique sécable 511 ainsi que la puce électronique 50 sont noyés dans le matériau constituant la bande 41.

En référence aux figures 1 et 2, selon l'invention, le colis 1 intègre également une unité électronique 6.

Cette unité électronique 6 est destinée à coopérer avec le scellé 4, et plus spécifiquement avec la puce électronique 50 de radio identification et les premiers moyens de communication 51.

En effet, cette unité électronique 6 comprend un émetteur-récepteur 7 qui est configuré pour envoyer périodiquement une requête radio 10 et réceptionner un signal retour 11.

L'antenne 510, située dans le scellé 4, permet de capter cette requête radio 10.

La requête radio 10, après avoir été captée par l'antenne 510, est transmise à la puce électronique 50.

Selon le présent mode de réalisation, la requête radio 10 est transmise à la puce électronique 50 par le biais du conducteur électrique sécable 511.

En réponse à la requête radio 10, la puce électronique 50 est configurée pour produire un signal retour 11.

Le signal retour 11 est formulé en intégrant un code d'identification de la puce électronique 50. En conséquence, ce signal retour 11 ne peut être produit que par le scellé 4.

Plus spécifiquement, et tel que cela est détaillé par la suite, le signal retour 11 est formulé en intégrant un code d'identification qui est unique, et inscrit dans la puce électronique 50. Ce code d'identification est notamment le nouveau code d'identification unique.

Après production, le signal retour 11 est véhiculé au travers du conducteur électrique sécable 511 et est émis par l'antenne 510.

L'émetteur-récepteur 7 permet alors de capter le signal retour 11 émis par la puce électronique 50 et son antenne 510 en réponse à la requête radio 10 préalablement émise.

L'unité électronique 6 est également paramétrée pour détecter une absence de signal retour 11.

En effet, l'unité électronique 6 comprend des moyens de traitement 60 configurés pour enregistrer un signal retour 11 en réponse à l'émission d'une requête radio 10, ainsi qu'à détecter l'absence de réception d'un signal retour 11 en réponse à l'émission d'une requête radio 10.

L'unité électronique 6 comprend également, selon l'invention, des deuxièmes moyens de communication 8 qui sont quant à eux paramétrés pour émettre, en l'absence de signal retour 11, un signal d'alerte 12 à destination d'un récepteur distant 90.

Ces deuxièmes moyens de communication 8 sont pilotés par les moyens de traitement 60.

Les deuxièmes moyens de communication 8 sont notamment conçus pour permettre l'émission du signal d'alerte 12 par le biais d'un protocole de communication sans fils, tel que ceux mis en oeuvre pour les réseaux cellulaires ou ceux du type Bluetooth et wifi.

En référence à la figure 1, l'unité électronique 6 comprend également des moyens d'horodatage 61 du signal d'alerte 12.

Selon les figures 1 et 4, l'unité électronique 6 peut plus spécifiquement prendre la forme d'une carte électronique intégrant l'émetteur-récepteur 7, les deuxièmes moyens de communication 8, les moyens de traitement 60, ainsi que les moyens d'horodatage 61.

Selon le présent mode de réalisation, cette unité électronique 6 est logée voire noyée dans l'une des parois 201 du contenant 2.

De cette manière, l'unité électronique 6 est protégée, et potentiellement rendue inaccessible, quand le colis 1 est dans une position d'ouverture telle qu'illustrée dans la figure 3.

Le colis 1 comprend une batterie électrique (non représentée), avantageusement rechargeable, permettant d'alimenter en énergie l'unité électronique 6.

Selon une conception préférentielle, l'émetteur-récepteur 7 et l'antenne 510 sont configurés pour fonctionner sur la bande des ultra hautes fréquences.

En référence à la figure 4, l'invention concerne également un système de traçabilité qui comprend des colis 1 tels que décrits précédemment, et un serveur informatique 9

Dans ce système, le récepteur distant 90 est intégré dans le serveur informatique 9.

Le serveur informatique 9 comprend également une base de données 91.

Cette base de données 91 répertorie des codes d'identification dits « certifiés », correspondant chacun à un code d'identification initial d'un scellé 4.

Le serveur informatique 9 est configuré pour analyser le code d'identification initial transmis par l'unité électronique, et le comparer aux codes d'identification certifiés de la base de données 91 dans le but d'identifier le code d'identification initial.

Le système met en oeuvre un procédé de traçabilité d'un colis 1 qui forme également un objet de l'invention.

Le procédé comprend :
- une étape d'émission d'une requête radio 10 par l'émetteur-récepteur 7 en direction du scellé 4, la requête radio 10 étant destinée à être captée par l'antenne 510 puis transmise à la puce électronique 50 ;
- une étape d'attente de réception d'un signal retour 11 produit par la puce électronique 50 en réponse à la requête radio 10.

En l'absence de réception d'un signal retour 11, l'étape d'attente de réception d'un signal retour 11 est suivie par une étape de diffusion d'un signal d'alerte 12 à destination d'un récepteur distant 90.

Ce procédé comprend également, préalablement aux étapes décrites précédemment, une séquence d'appairage ayant pour objectif d'associer électroniquement le scellé 4 à l'unité électronique 6 du colis 1.

A cet effet, la séquence d'appairage comprend successivement :
- une étape de lecture du code d'identification initial du scellé 4 ;
- une étape de transmission au serveur informatique 9 du code d'identification initial ;
- une étape d'identification du code d'identification initial ;
- une étape de génération d'un nouveau code d'identification unique, et de transmission du nouveau code d'identification unique à l'émetteur-récepteur 7 ;
- une étape d'envoi et d'inscription du nouveau code d'identification dans le scellé 4 par l'émetteur-récepteur 7.

L'étape de lecture du code d'identification initial, et l'étape de transmission au serveur informatique 9 sont réalisées par l'émetteur-récepteur 7.

Suite à ces deux étapes, l'étape d'identification, et l'étape de génération et de transmission du nouveau code d'identification unique sont réalisées par le serveur informatique 9.

L'étape d'identification consiste à comparer le code d'identification initial aux codes d'identification certifiés de la base de données 91 pour certifier le scellé 4 et autoriser l'étape de génération d'un nouveau code d'identification unique.

Lors de l'étape d'envoi et d'inscription du nouveau code d'identification dans le scellé 4 par l'émetteur-récepteur 7, le nouveau code d'identification unique peut être inscrit dans la puce électronique 50 en remplacement du code d'identification initial.

Dans le cas où le code d'identification initial est retrouvé dans la base de données 91, alors le scellé 4 est certifié. En d'autres termes, le scellé 4 est authentifié et accepté dans le système.

Dans le cas où le code d'identification initial n'est pas retrouvé dans la base de données 91, alors le scellé 4 est rejeté.

Alternativement, ou en complément, dans le cas où le scellé 4 est rejeté, alors le serveur informatique 9 peut envoyer un signal d'appairage frauduleux à l'unité électronique 6.

Dans ce cas, le système ne peut garantir le suivi électronique du colis 1 à l'aide du scellé 4.

## Revendications

1. Colis (1) comprenant :
- un contenant (2) présentant une cavité (20) ;
- des moyens de fermeture (3) pouvant adopter, avec le contenant (2), une configuration de fermeture dans laquelle les moyens de fermeture (3) interdisent l'accès à la cavité (20), ou une configuration d'ouverture dans laquelle les moyens de fermeture (3) autorisent l'accès à la cavité (20) ;
- un scellé (4) garant d'un maintien du colis (1) dans sa configuration de fermeture ;
dans lequel le scellé (4) comprend :
- une partie dégradable (400) irréversiblement lors d'un passage du colis (1) de la configuration de fermeture à la configuration d'ouverture ;
- une puce électronique (50) de radio identification ;
- des premiers moyens de communication (51) comprenant une antenne (510), les premiers moyens de communication (51) étant couplés à la puce électronique (50) et s'étendant au moins partiellement dans la partie dégradable (400) du scellé (4) ; **caractérisé en ce que** le colis (1) intègre une unité électronique (6) distincte du scellé (4), l'unité électronique (6) étant logée dans une paroi (201), ou un fond (202), ou un couvercle (30) du contenant (2), l'unité électronique (6) comprenant :
- un émetteur-récepteur (7) configuré pour envoyer périodiquement une requête radio (10) susceptible d'être captée par l'antenne (510) puis transmise à la puce électronique (50), et pour réceptionner un signal retour (11) produit par la puce électronique (50) en réponse à la requête radio (10) puis transmis par l'antenne (510), l'unité électronique (6) étant paramétrée pour détecter une absence de signal retour (11) ;
- des deuxièmes moyens de communication (8) paramétrés pour émettre, en l'absence de signal retour (11), un signal d'alerte (12) à destination d'un récepteur distant (90) ; et **en ce que** chacun du contenant (2) et des moyens de fermeture (3) présente un organe de réception (21, 31) du scellé (4), les deux organes de réception étant à proximité immédiate l'un de l'autre dans la configuration de fermeture du colis (1), le scellé (4) étant destiné à être couplé sur chacun des organes de réception dans la configuration de fermeture du colis.

2. Colis (1) selon la revendication précédente, **caractérisé en ce que** les premiers moyens de communication (51) comprennent également au moins un conducteur électrique sécable (511) couplant l'antenne (510) à la puce électronique (50) de radio identification, le ou les conducteurs électriques sécables (511) traversant la partie dégradable (400) du scellé (4).

3. Colis (1) selon l'une quelconque des revendications précédentes, **caractérisé en ce que** le scellé (4) prend la forme d'un collier.

4. Colis (1) selon la revendication précédente, **caractérisé en ce que** le collier comprend :
- une tête (40) portant une cage (42) ;
- une bande (41) en matériau souple s'étendant depuis la tête (40), et étant complémentaire en insertion de la cage (42), la bande (41) formant la partie dégradable du scellé.

5. Colis (1) selon la revendication précédente, **caractérisé en ce que** la bande (41) s'étend depuis la tête (40) jusqu'à une extrémité libre (410), le ou les conducteurs électriques sécables (511) s'étendant le long de la bande (41) entre la tête (40) et l'extrémité libre (410).

6. Colis (1) selon la revendication précédente, **caractérisé en ce que** la puce électronique (50) de radio identification est logée dans l'extrémité libre (410) de la bande (41), et **en ce que** l'antenne (510) des premiers moyens de communication (51) est logée dans la tête (40) du collier.

7. Colis (1) selon l'une quelconque des revendications 4 à 6, **caractérisé en ce que** le collier est un collier de serrage autobloquant, la cage (42) étant une cage anti-retour.

8. Colis (1) selon l'une quelconque des revendications précédentes, **caractérisé en ce que** l'unité électronique (6) est noyée dans une paroi (201) du contenant (2).

9. Colis (1) selon l'une quelconque des revendications précédentes, **caractérisé en ce que** l'unité électronique (6) comprend des moyens d'horodatage (61) du signal d'alerte (12).

10. Système de traçabilité, **caractérisé en ce qu'**il comprend :
- au moins un colis (1) selon l'une quelconque des revendications précédentes, le scellé (4) du colis (1) comprenant un code d'identification initial inscrit dans la puce électronique (50) de radio identification ;
- un serveur informatique (9) intégrant le récepteur distant (90), le serveur informatique (9) comprenant une base de données (91) répertoriant des codes d'identifications certifiés, et étant configuré pour identifier le code d'identification initial du scellé (4) dans la base de données (91).

11. Procédé de traçabilité d'un colis (1) du système de traçabilité selon la revendication précédente, **caractérisé en ce qu'**il comprend :
- une étape d'émission d'une requête radio (10) par l'émetteur-récepteur (7) en direction du scellé (4), la requête radio (10) étant susceptible d'être captée par l'antenne (510) puis transmise à la puce électronique (50) ;
- une étape d'attente de réception d'un signal retour (11) produit par la puce électronique (50) en réponse à la requête radio (10) ;
et **en ce que**, en l'absence de réception d'un signal retour (11), l'étape d'attente de réception d'un signal retour (11) est suivie par une étape de diffusion d'un signal d'alerte (12) à destination d'un récepteur distant (90).

12. Procédé selon la revendication précédente, **caractérisé en ce qu'**il comprend, préalablement à l'étape d'émission d'une requête radio (10), une séquence d'appairage du scellé (4) au colis (1), la séquence d'appairage comprenant successivement :
- une étape de lecture du code d'identification initial du scellé (4) par l'émetteur-récepteur (7) ;
- une étape de transmission au serveur informatique (9) du code d'identification initial par l'émetteur-récepteur (7) ;
- une étape d'identification du code d'identification initial par le serveur informatique (9) ;
- une étape de génération d'un nouveau code d'identification unique par le serveur informatique (9), et de transmission du nouveau code d'identification unique à l'émetteur-récepteur (7) ;
- une étape d'envoi et d'inscription du nouveau code d'identification dans le scellé (4) par l'émetteur-récepteur (7).

13. Procédé selon la revendication précédente, **caractérisé en ce que** la séquence d'appairage se termine par un test de présence du scellé (4) sur le colis (1) par l'émetteur-récepteur (7).

14. Procédé selon l'une quelconque des revendications 12 et 13, **caractérisé en ce que** l'étape d'identification consiste à comparer le code d'identification initial aux codes d'identification certifiés de la base de données (91) pour certifier le scellé (4) et autoriser l'étape de génération d'un nouveau code d'identification unique.

## Patentansprüche

1. Verpackung (1), umfassend:
- einen Behälter (2), der einen Hohlraum (20) aufweist;
- Verschlussmittel (3), die mit dem Behälter (2) eine Verschlusskonfiguration annehmen können, in der die Verschlussmittel (3) den Zugriff auf den Hohlraum (20) untersagen, oder eine Öffnungskonfiguration, in der die Verschlussmittel (3) den Zugriff auf den Hohlraum (20) gestatten;
- ein Siegel (4) als Garant für das Verbleiben der Verpackung (1) in ihrer Verschlusskonfiguration;
wobei das Siegel (4) umfasst:
- einen unumkehrbar zerstörbaren Teil (400) bei einem Wechsel der Verpackung (1) aus der Verschlusskonfiguration in die Öffnungskonfiguration;
- einen elektronischen Funkidentifikationschip (50);
- erste Kommunikationsmittel (51), die eine Antenne (510) umfassen, wobei die ersten Kommunikationsmittel (51) mit dem elektronischen Chip (50) gekoppelt sind und sich mindestens zum Teil in den zerstörbaren Teil (400) des Siegels (4) erstrecken;
**dadurch gekennzeichnet, dass** die Verpackung (1) eine elektronische Einheit (6) integriert, die von dem Siegel (4) unterschiedlich ist, wobei die elektronische Einheit (6) in eine Wand (201) oder einen Boden (202) oder einen Deckel (30) des Behälters (2) eingelassen ist, wobei die elektronische Einheit (6) umfasst:
- einen Sender-Empfänger (7), der zum periodischen Senden einer Funkabfrage (10), die von der Antenne (510) erfassbar und dann an den elektronischen Chip (50) weiterleitbar ist, und zum Empfangen eines rückläufigen Signals (11), das von dem elektronischen Chip (50) als Antwort auf die Funkabfrage (10) erzeugt, dann von der Antenne (510) weitergeleitet wird, ausgelegt ist, wobei die elektronische Einheit (6) eingestellt ist, um eine Abwesenheit des rückläufigen Signals (11) zu ermitteln;
- zweite Kommunikationsmittel (8), die eingestellt sind, um bei Abwesenheit des rückläufigen Signals (11) ein Warnsignal (12) an einen entfernten Empfänger (90) zu senden; und dass sowohl der Behälter (2) als auch die Verschlussmittel (3) ein Empfangsorgan (21, 31) des Siegels (4) aufweisen, wobei die zwei Empfangsorgane in der Verschlusskonfiguration der Verpackung (1) in unmittelbarer Nähe zueinander sind, wobei das Siegel (4) in der Verschlusskonfiguration der Verpackung zur Kopplung auf jedem der Empfangsorgane bestimmt ist.

2. Verpackung (1) nach vorangehendem Anspruch, **dadurch gekennzeichnet, dass** die ersten Kommunikationsmittel (51) ebenfalls mindestens einen durchtrennbaren elektrischen Leiter (511) umfassen, der die Antenne (510) an den elektronischen Funkidentifikationschip (50) koppelt, wobei der oder die durchtrennbare(n) elektrische(n) Leiter (511) den zerstörbaren Teil (400) des Siegels (4) durchquert/durchqueren.

3. Verpackung (1) nach einem der vorangehenden Ansprüche, **dadurch gekennzeichnet, dass** das Siegel (4) die Form eines Colliers annimmt.

4. Verpackung (1) nach vorangehendem Anspruch, **dadurch gekennzeichnet, dass** das Collier umfasst:
- einen Kopf (40), der einen Käfig (42) trägt;
- ein Band (41) aus elastischem Material, das sich ab dem Kopf (40) erstreckt und komplementär beim Einsetzen in den Käfig (42) ist, wobei das Band (41) den zerstörbaren Teil des Siegels bildet.

5. Verpackung (1) nach vorangehendem Anspruch, **dadurch gekennzeichnet, dass** sich das Band (41) ab dem Kopf (40) bis zu einem freien Ende (410) erstreckt, wobei sich der oder die durchtrennbare(n) elektrische(n) Leiter (511) entlang des Bandes (41) zwischen dem Kopf (40) und dem freien Ende (410) erstreckt/erstrecken.

6. Verpackung (1) nach vorangehendem Anspruch, **dadurch gekennzeichnet, dass** der elektronische Funkidentifikationschip (50) im freien Ende (410) des Bandes (41) untergebracht ist und dass die Antenne (510) der ersten Kommunikationsmittel (51) im Kopf (40) des Colliers untergebracht ist.

7. Verpackung (1) nach einem der Ansprüche 4 bis 6, **dadurch gekennzeichnet, dass** das Collier ein selbstblockierendes Spanncollier ist, wobei der Käfig (42) ein rückkehrverhindernder Käfig ist.

8. Verpackung (1) nach einem der vorangehenden Ansprüche, **dadurch gekennzeichnet, dass** die elektronische Einheit (6) in einer Wand (201) des Behälters (2) eingelassen ist.

9. Verpackung (1) nach einem der vorangehenden Ansprüche, **dadurch gekennzeichnet, dass** die elektronische Einheit (6) Zeitstempelmittel (61) des Warnsignals (12) umfasst.

10. Nachverfolgungssystem, **dadurch gekennzeichnet, dass** es umfasst:
- mindestens eine Verpackung (1) nach einem der vorangehenden Ansprüche, wobei das Siegel (4) der Verpackung (1) einen ursprünglichen Identifikationscode umfasst, der in den elektronischen Funkidentifikationschip (50) eingeschrieben ist;
- einen IT-Server (9), der den entfernten Empfänger (90) integriert, wobei der IT-Server (9) eine Datenbank (91) umfasst, in der zertifizierte Identifikationscodes aufgeführt sind und zur Identifizierung des ursprünglichen Identifikationscodes des Siegels (4) in der Datenbank (91) ausgelegt ist.

11. Verfahren zur Nachverfolgung einer Verpackung (1) des Nachverfolgungssystem nach vorangehendem Anspruch, **dadurch gekennzeichnet, dass** es umfasst:
- einen Schritt des Sendens einer Funkabfrage (10) durch den Sender-Empfänger (7) in Richtung des Siegels (4), wobei die Funkabfrage (10) von der Antenne (510) erfassbar ist, dann an den elektronischen Chip (50) weitergeleitet wird;
- einen Schritt des Wartens auf den Empfang eines rückläufigen Signals (11), das von dem elektronischen Chip (50) als Antwort auf die Funkabfrage (10) erzeugt wird;
und dass, bei Abwesenheit des Empfangs eines rückläufigen Signals (11), dem Schritt des Wartens auf den Empfang eines rückläufigen Signals (11) ein Schritt des Verbreitens eines Warnsignals (12) in Richtung eines entfernten Empfängers (90) folgt.

12. Verfahren nach vorangehendem Anspruch, **dadurch gekennzeichnet, dass** es vor dem Schritt des Sendens einer Funkabfrage (10) eine Pairingsequenz des Siegels (4) an der Verpackung (1) umfasst, wobei die Pairingsequenz aufeinanderfolgend umfasst:
- einen Schritt des Lesens des ursprünglichen Identifikationscodes des Siegels (4) durch den Sender-Empfänger (7);
- einen Schritt des Übertragens des ursprünglichen Identifikationscodes an den IT-Server (9) durch den Sender-Empfänger (7);
- einen Identifikationsschritt des ursprünglichen Identifikationscodes durch den IT-Server (9);
- einen Schritt des Erzeugens eines neuen einzigartigen Identifikationscodes durch den IT-Server (9) und des Übertragens des neuen einzigartigen Identifikationscodes an den Sender-Empfänger (7);
- einen Schritt des Sendens und Eintragens des neuen Identifikationscodes in das Siegel (4) durch den Sender-Empfänger (7).

13. Verfahren nach vorangehendem Anspruch, **dadurch gekennzeichnet, dass** die Pairingsequenz durch einen Anwesenheitstest des Siegels (4) auf der Verpackung (1) durch den Sender-Empfänger (7) beendet wird.

14. Verfahren nach einem der Ansprüche 12 und 13, **dadurch gekennzeichnet, dass** der Identifikationsschritt im Vergleichen des ursprünglichen Identifikationscodes mit den zertifizierten Identifikationscodes der Datenbank (91) besteht, um das Siegel (4) zu identifizieren und den Schritt des Erzeugens eines neuen einzigartigen Identifikationscodes zu genehmigen.

## Claims

1. A parcel (1) comprising:
- a container (2) having a cavity (20);
- closing means (3) which can adopt, with the container (2), a closed configuration in which the closing means (3) prevent access to the cavity (20), or an open configuration in which the closing means (3) allow access to the cavity (20);
- a seal (4) guaranteeing that the parcel (1) is held in its closed configuration;
wherein the seal (4) comprises:
- an irreversibly degradable part (400) when the parcel (1) passes from the closed configuration to the open configuration;
- an electronic radio identification chip (50);
- first communication means (51) comprising an antenna (510), the first communication means (51) being coupled to the electronic chip (50) and extending at least partially in the degradable part (400) of the seal (4);
**characterized in that** the parcel (1) integrates an electronic unit (6) distinct from the seal (4),
the electronic unit (6) being housed in a wall (201), or a bottom (202), or a cover (30) of the container (2), the electronic unit (6) comprising:
- a transceiver (7) configured to periodically send a radio request (10) capable of being picked up by the antenna (510) then transmitted to the electronic chip (50), and to receive a return signal (11) produced by the electronic chip (50) in response to the radio request (10) then transmitted by the antenna (510), the electronic unit (6) being parameterized to detect an absence of return signal (11);
- second communication means (8) parameterized to emit, in the absence of a return signal (11), an alert signal (12) to a remote receiver (90); and **in that** each of the container (2) and of the closing means (3) has a receiving member (21, 31) of the seal (4), the two receiving members being in immediate proximity to each other in the closed configuration of the parcel (1), the seal (4) being intended to be coupled to each of the receiving members in the closed configuration of the parcel.

2. The parcel (1) according to the preceding claim, **characterized in that** the first communication means (51) also comprise at least one breakable electrical conductor (511) coupling the antenna (510) to the electronic radio identification chip (50), the breakable electrical conductor(s) (511) passing through the degradable part (400) of the seal (4).

3. The parcel (1) according to any one of the preceding claims, **characterized in that** the seal (4) takes the form of a collar.

4. The parcel (1) according to the preceding claim, **characterized in that** the collar comprises:
- a head (40) carrying a cage (42);
- a strip (41) made of flexible material extending from the head (40), and being complementary in insertion to the cage (42), the strip (41) forming the degradable part of the seal.

5. The parcel (1) according to the preceding claim, **characterized in that** the strip (41) extends from the head (40) to a free end (410), the breakable electrical conductor(s) (511) extending along the strip (41) between the head (40) and the free end (410).

6. The parcel (1) according to the preceding claim, **characterized in that** the electronic radio identification chip (50) is housed in the free end (410) of the strip (41), and **in that** the antenna (510) of the first communication means (51) is housed in the head (40) of the collar.

7. The parcel (1) according to any one of claims 4 to 6, **characterized in that** the collar is a self-locking clamping collar, the cage (42) being a non-return cage.

8. The parcel (1) according to any one of the preceding claims, **characterized in that** the electronic unit (6) is embedded in a wall (201) of the container (2).

9. The parcel (1) according to any one of the preceding claims, **characterized in that** the electronic unit (6) comprises means for timestamping (61) the alert signal (12).

10. A traceability system, **characterized in that** it comprises:
- at least one parcel (1) according to any one of the preceding claims, the seal (4) of the parcel (1) comprising an initial identification code registered in the electronic radio identification chip (50);
- a computer server (9) integrating the remote receiver (90), the computer server (9) comprising a database (91) listing certified identification codes, and being configured to identify the initial identification code of the seal (4) in the database (91).

11. A method for traceability of a parcel (1) of the traceability system according to the preceding claim, **characterized in that** it comprises:
- a step of emitting a radio request (10) by the transceiver (7) towards the seal (4), the radio request (10) being capable of being picked up by the antenna (510) then transmitted to the electronic chip (50);
- a step of waiting for the receipt of a return signal (11) produced by the electronic chip (50) in response to the radio request (10);
and **in that**, in the absence of receipt of a return signal (11), the step of waiting for the receipt of a return signal (11) is followed by a step of broadcasting an alert signal (12) to a remote receiver (90).

12. The method according to the preceding claim, **characterized in that** it comprises, prior to the step of emitting a radio request (10), a sequence of pairing the seal (4) to the parcel (1), the pairing sequence successively comprising:
- a step of reading the initial identification code of the seal (4) by the transceiver (7);
- a step of transmitting the initial identification code to the computer server (9) by the transceiver (7);
- a step of identifying the initial identification code by the computer server (9);
- a step of generating a new unique identification code by the computer server (9), and transmitting the new unique identification code to the transceiver (7);
- a step of sending and registering the new identification code in the seal (4) by the transceiver (7).

13. The method according to the preceding claim, **characterized in that** the pairing sequence ends with a test for the presence of the seal (4) on the parcel (1) by the transceiver (7).

14. The method according to any one of claims 12 and 13, **characterized in that** the identification step consists in comparing the initial identification code with the certified identification codes of the database (91) to certify the seal (4) and authorize the step of generating a new unique identification code.
